# EUROPÄISCHE PATENTSCHRIFT

(11) **EP 4 378 757 B1**
(45) Veröffentlichungstag und Bekanntmachung des Hinweises auf die Patenterteilung: **06.08.2025**
(21) Anmeldenummer: 23212545.0
(22) Anmeldetag: 28.11.2023
(51) Int. Cl.: B60P 7/08, F16B 45/00, F16B 2/24, F16B 5/12, F16B 7/04, F16B 7/22, F16B 21/02, F16B 21/18, F16B 5/00

(54) **ZURRBÜGEL ZUR ANBRINGUNG AN EINER LADEFLÄCHE**
LASHING BAR FOR ATTACHMENT TO A LOADING SURFACE
BARRE D'AMARRAGE DESTINÉE À ÊTRE MONTÉE SUR UNE SURFACE DE CHARGEMENT

(30) Priorität: 29.11.2022 DE 102022131574
(43) Veröffentlichungstag der Anmeldung: 05.06.2024
(73) Patentinhaber: Suer Nutzfahrtechnik GmbH & Co. KG, 42929 Wermelskirchen (DE)
(72) Erfinder: Suer, Peter, 42929 Wermelskirchen (DE); Hirsch, Dirk, 42929 Wermelskirchen (DE)
(74) Vertreter: Müller, Enno

(56) Entgegenhaltungen:
- EP-A1- 3 392 086
- EP-B1- 0 471 325
- JP-A- 2012 041 016
- US-B2- 8 028 551

## Beschreibung

### Gebiet der Technik

Die Erfindung betrifft einen Zurrbügel zur Anbringung an einer Ladefläche eines Lastkraftfahrzeugs, wobei der Zurrbügel eine im Wesentlichen U-förmige Ausgestaltung aufweist, mit einem Querholm und zwei von dem Querholm ausgehenden Schenkeln, einem ersten Schenkel und einem zweiten Schenkel, wobei die Schenkel an ihren dem Querholm abgewandten Enden zur Sicherung an der Ladefläche mit einem Sicherungselement verbindbar sind und der eine Längsachse aufweisende erste Schenkel an seinem dem Querholm abgewandten Ende eine Sicherungsausformung aufweist.

### Stand der Technik

Zurrbügel der in Rede stehenden Art sind bereits in verschiedenen Ausführungsformen bekannt geworden. Es wird beispielsweise auf die EP 3392086 A1 verwiesen. Um beispielsweise auf den Ladeflächen von Lastkraftfahrzeugen oder ähnlichen Fahrzeugen Ladung gegen Verrutschen sichern zu können, sind zumeist ladeflächenseitig derartige Zurrbügel vorgesehen, in denen Spanngurte, Seile oder Ketten eingehakt oder durch die U-förmige Ausgestaltung der Zurrbügel geführt werden können.

### Zusammenfassung der Erfindung

Im Hinblick auf den vorbeschriebenen Stand der Technik stellt sich der Erfindung die Aufgabe, einen Zurrbügel der in Rede stehenden Art insbesondere zur Ermöglichung einer benutzerfreundlichen Montage an einer Ladefläche weiter verbessert auszugestalten.

Eine mögliche Lösung der Aufgabe ist nach einem ersten Erfindungsgedanken bei einem Zurrbügel gegeben, bei welchem darauf abgestellt ist, dass das Sicherungselement zwischen einer Montagestellung, in der die Sicherungsausformung durch das Sicherungselement überlaufbar ist, und einer Verschlussstellung, in der die Sicherungsausformung durch das Sicherungselement nicht überlaufbar ist, um die Längsachse verschwenkbar ist.

Zufolge der vorgeschlagenen Ausgestaltung ist eine benutzerfreundliche Montage eines derartigen Zurrbügels an einer Ladefläche eines Lastkraftfahrzeugs oder dergleichen ermöglicht. Das Sicherungselement ist unter Zusammenwirkung mit der Sicherungsausformung des Schenkels in einfacher Weise durch Verschwenken um die Längsachse des die Sicherungsausformung aufweisenden Schenkels verschwenkbar. Dabei kann vorgesehen sein, dass aus der Montagestellung, in der die Sicherungsausformung durch das Sicherungselement überlaufbar ist, das Sicherungselement bis zum Erreichen einer vorgegebenen Verschlussstellung um beispielsweise mehr als 10°, weiter beispielsweise mehr als 45°, weiter bevorzugt bis hin zu 100 oder 120°, insbesondere aber um etwa 90°, zu verschwenken ist. Dabei kann allerdings bereits nach einem Verschwenken um wenige Winkelgrade, beispielsweise bereits mit einem Verschwenken des Sicherungselements um beispielsweise 2 bis 5° bis hin zu beispielsweise 10° aus der Montagestellung heraus, eine Stellung des Sicherungselements relativ zu dem die Schwenkachse definierenden Schenkel des Zurrbügels eingenommen sein, die ein Überlaufen der schenkelseitigen Sicherungsausformung in Achsrichtung verhindert. Entsprechend kann sich bereits mit Einsetzen der Verschwenkung des Sicherungselements aus der Montagestellung heraus eine erste Sicherungsstellung ergeben, in welcher das Sicherungselement in Achsrichtung des Schenkels an diesem gefangen ist. Die weitere Handhabung zur Einnahme der abschließenden Verschlussstellung ist hierdurch vereinfacht.

Weitere Merkmale sind nachstehend, auch in der Figurenbeschreibung, oftmals in ihrer bevorzugten Zuordnung zu der grundsätzlich beschriebenen Lösung oder zu weiteren Merkmalen erläutert. Sie können aber auch in einer Zuordnung zu nur einzelnen schon beschriebenen Merkmalen oder des jeweiligen weiter beschriebenen Merkmals oder jeweils unabhängig von Bedeutung sein.

So kann gemäß einer möglichen Ausgestaltung die Sicherungsausformung starr mit dem Schenkel verbunden sein. Diesbezüglich kann es sich weiter um eine einteilige, weiter bevorzugt auch materialeinheitliche Ausgestaltung von Schenkel und Sicherungsausformung handeln. Weiter kann beispielsweise eine in Achsrichtung hintergreifbare Sicherungsausformung in Art einer hammerkopfartigen Ausgestaltung des betreffenden Endabschnitts des ansonsten bevorzugt kreiszylindrisch ausgebildeten Schenkels gegeben sein, wobei weiter im Übergangsbereich von der Kreiszylinderform des Schenkels in den hammerkopfartig ausgebildeten Endabschnitt eine konzentrisch zu der Längsachse des Schenkels umlaufende Nut vorgesehen sein kann. In dem Bereich der umlaufenden Nut kann das Sicherungselement in der Montagestellung nach Überlaufen der Sicherungsausformung gelangen, sodass eine Verschwenkung um die geometrische Längsachse des Schenkels ermöglicht ist.

Das Sicherungselement kann, wie bevorzugt, zur Verbindung mit beiden Schenkeln des Zurrbügels ausgebildet sein. Die Verbindung mit dem weiteren (zweiten) Schenkel des Zurrbügels ist dabei bevorzugt erst in der eingenommenen Verschlussstellung nach Verschwenken des Sicherungselements erreichbar.

In weiterer Ausgestaltung kann das Sicherungselement an dem ersten Schenkel in der Verschlussstellung durch die Sicherungsausformung gehaltert sein und an dem zweiten Schenkel durch ein an dem Sicherungselement vorgesehenes Rastteil. Das Rastteil kann ausgebildet sein zur Zusammenwirkung mit dem zweiten Schenkel, wobei weiter das Rastteil unmittelbar als Teilabschnitt des Sicherungselements ausgebildet sein kann, alternativ als ein gesondertes, jedoch mit dem Sicherungselement verbindbares Teil. Die Rasthalterungsstellung kann des Weiteren selbsttätig mit Erreichen der Verschlussstellung eingenommen werden, alternativ aber auch durch einen entsprechenden Eingriff des Benutzers, der das Rastteil in der Verschlussstellung des Sicherungselements in diese Rasthalterungsstellung manuell verbringen kann.

So kann weiter das Sicherungselement zur Halterung an dem zweiten Schenkel eine Aufnahmeöffnung aufweisen, in welche das dem Querholm abgewandte Ende des zweiten Schenkels im Zuge der Verschwenkung des Sicherungselements um das Ende des ersten Schenkels aufnehmbar ist. Diese Aufnahmeöffnung kann durch das Sicherungselement selbst und/oder durch das Rastteil, insbesondere einen Abschnitt des Rastteils gebildet sein. Auch kann durch eine Randkante der Aufnahmeöffnung ein Schwenkanschlag für das Sicherungselement gegeben sein, insbesondere in Zusammenwirkung mit dem zuordbaren Ende des zweiten Schenkels. Ist das Ende des zweiten Schenkels in der Aufnahmeöffnung aufgenommen, kann sich bereits daraus eine Sicherung des Verschlusselements gegen eine Schwenkrückverlagerung ergeben.

Auch kann der zweite Schenkel zur formschlüssigen Zusammenwirkung mit dem Sicherungselement in der Verschlussstellung eine Aussparung aufweisen. Beispielsweise kann hierzu der zweite Schenkel einen querschnittsreduzierten Bereich aufweisen, welcher in der Verschlussstellung unter formschlüssiger Zusammenwirkung mit dem Sicherungselement zum Einen einen Schwenk-Endanschlag bilden kann und zum Weiteren zugleich eine Formschlusssicherung des Sicherungselements in Längserstreckungsrichtung des zweiten Schenkels.

Insbesondere, aber nicht ausschließlich, bei einer kreisförmigen Querschnittsgestaltung des zweiten Schenkels kann eine solche Aussparung beispielsweise durch eine mit Bezug auf eine in Längserstreckung des zweiten Schenkels gerichtete Mittelachse umlaufende Ringnut sein.

In einer möglichen, darüber hinaus auch bevorzugten Ausgestaltung kann das Rastteil durch das Ende des zweiten Schenkels im Zuge einer Aufnahme in die Aufnahmeöffnung aus einer Raststellung in eine Freigabestellung bewegbar sein. Diese Bewegung des Rastteils kann unmittelbar ausgelöst sein zufolge einer Kollision mit dem Ende des zweiten Schenkels vor Erreichen der Verschlussstellung. Eine Verlagerung des Rastteils in die Freigabestellung kann erforderlich sein, um die Verschlussstellung zu erreichen, in welcher das Ende des zweiten Schenkels durch die Aufnahmeöffnung des Sicherungselements aufgenommen ist.

In diesem Zusammenhang kann es sich als vorteilhaft erweisen, wenn das Rastteil zumindest partiell als Federteil ausgebildet ist oder durch ein entsprechendes Federelement partiell belastet ist. So kann das Rastteil in weiterer Ausgestaltung die Raststellung selbsttätig einnehmen, beispielsweise zufolge einer federelastischen Rückstellung des Rastteils nach Aufhebung einer, die Freigabestellung bewirkenden Belastung des Rastteils durch das Ende des zweiten Schenkels.

Das Rastteil kann beispielsweise als ein Biegeteil aus einem Federblech vorgesehen sein.

Darüber hinaus kann das Rastteil zur Zusammenwirkung mit einer an dem zweiten Schenkel ausgebildeten Rastnut geformt sein. Eine solche Rastnut kann zugewandt dem freien Ende des zweiten Schenkels bevorzugt umlaufend vorgesehen sein.

Alternativ kann das Rastteil in der Verschlussstellung aber auch mit einem in seiner Kontur rücksprungfrei bis zu einer Endfläche des zweiten Schenkels durchgehenden Außenfläche des zweiten Schenkels zusammenwirken. In der Verschlussstellung kann das Sicherungselement unter Zusammenwirkung des Rastteils mit dem schenkelseitigen Abschnitt allein über das Rastteil in der Schwenkverlagerungsrichtung gesichert sein. Das Rastteil kann hierzu in der Verschlussstellung den rücksprungfreien Schenkelabschnitt umfassen und sich gegebenenfalls an der Außenfläche in Schwenkrichtung des Sicherungselements abstützen.

Auch kann das Rastteil eine Halteöffnung aufweisen, zur Aufnahme des Endes des zweiten Schenkels bei der Bewegung des Rastteils aus der Freigabestellung in die Raststellung. Durch die Halteöffnung des Rastteils kann zur Sicherung der Verschlussstellung ein Einfangen des zweiten Schenkels, insbesondere dessen freien Endes, erreicht sein, sodass eine Schwenkrückverlagerung des Sicherungselements nur willensbetont unter Aufhebung der so gestalteten Formschlussverbindung zwischen dem zweiten Schenkel und der Halteöffnung erreicht werden kann.

Das Rastteil kann darüber hinaus mit einer Randkante der Halteöffnung mit der an dem zweiten Schenkel umlaufend ausgebildeten Rastnut in der Verschlussstellung rastend zusammenwirken.

In vorteilhafter Weise kann das Rastteil mit dem Sicherungselement verbunden sein. Es kann sich diesbezüglich um eine Rast- oder Klemmverbindung handeln, darüber hinaus kann diesbezüglich beispielsweise auch eine Klebeverbindung, weiter alternativ aber auch eine Schraub- oder Nietverbindung vorgesehen sein. Das Rastteil ist entsprechend bevorzugt betrieblich nicht lösbar mit dem Sicherungselement verbunden.

Die Aufnahmeöffnung, welche gegebenenfalls zusätzlich zu der Halteöffnung an dem Rastteil, darüber hinaus aber auch kombinativ oder alternativ hierzu an dem Sicherungselement ausgebildet ist, kann zur Aufnahme des Endes des zweiten Schenkels beispielsweise - mit Bezug auf einen Querschnitt quer zur Längserstreckung des Schenkels - U-förmig gestaltet sein.

In einer weiter möglichen Ausgestaltung kann sowohl der erste als auch der zweite Schenkel eine erste und eine zweite Sicherungsausformung aufweisen, die durch Verschwenken des Sicherungselements um die Längsachse überlaufbar sind. Die Sicherungsausformungen beider Schenkel können gleichgestaltet sein, so weiter beispielsweise, wie vorbeschrieben, zufolge einer hintergreifbaren, hammerkopfartigen Ausgestaltung. Alternativ können die Sicherungsausformungen beider Schenkel auch unterschiedlich gestaltet sein, dies insbesondere hinsichtlich ihrer geometrischen Ausgestaltung. Bezüglich der weiteren Ausgestaltung der Sicherungsausformung des zweiten Schenkels kann dasselbe wie vorbeschrieben bezüglich der Ausgestaltung der Sicherungsausformung des ersten Schenkels gelten.

Besonders im Zusammenhang mit der Ausgestaltung beider Schenkel mit jeweils einer Sicherungsausformung kann gemäß einer Weiterbildung vorgesehen sein, dass zwei Sicherungselemente ausgebildet sind, ein erstes und ein zweites Sicherungselement, wobei das erste Sicherungselement mit dem ersten Schenkel zusammenwirkt und das zweite Sicherungselement mit dem zweiten Schenkel. So kann weiter das erste Sicherungselement zwischen einer Montagestellung, in der die Sicherungsausformung des ersten Schenkels durch das erste Sicherungselement überlaufbar ist, und einer Verschlussstellung, in der die Sicherungsausformung des ersten Schenkels durch das erste Sicherungselement nicht überlaufbar ist, um die Längsachse des ersten Schenkels verschwenkbar sein, wie auch weiter das zweite Sicherungselement zwischen einer Montagestellung, in der die Sicherungsausformung des zweiten Schenkels durch das zweite Sicherungselement überlaufbar ist, und einer Verschlussstellung, in der die Sicherungsausformung des zweiten Schenkels durch das zweite Sicherungselement nicht überlaufbar ist, um die Längsachse des zweiten Schenkels verschwenkbar sein kann.

Das erste und das zweite Sicherungselement können in der Verschlussstellung der beiden Sicherungselemente miteinander verbindbar sein. Durch eine solche Verbindung kann die Verschlussstellung gesichert sein. Weiter kann sich eine solche Verbindung gegebenenfalls selbsttätig mit Erreichen der Verschlussstellung einstellen. Zur Verbindung des ersten und des zweiten Sicherungselements in der Verschlussstellung kann ein Verschlussteil vorgesehen sein. Auch ist diesbezüglich eine durch den Benutzer herbeizuführende manuelle Verlagerung des Verschlussteils in die Verbindungsstellung möglich.

So kann ein solches Verschlussteil zur Verbindung der Sicherungselemente als ein mit dem ersten und/oder dem zweiten Sicherungselement verbundenes Schiebeteil ausgebildet sein. Bevorzugt ist ein solches Schiebeteil mit Bezug auf die Längsachse des ersten und/oder des zweiten Schenkels im Wesentlichen in Radialrichtung entlang des jeweiligen Sicherungselements von einer Offenstellung in eine Verschlussstellung und gegebenenfalls auch zurück verlagerbar.

Zudem können das erste und das zweite Sicherungselement freie, in der Verschlussstellung in eine gegenseitige Anlage bringbare Sicherungselement-Enden aufweisen. In der Anlagestellung der beiden Sicherungselemente aneinander kann zudem eine Drehblockierung der Sicherungselemente über die Verschlussstellung hinaus gegeben sein.

Die Sicherungselement-Enden können, wie auch weiter bevorzugt, in der Verschlussstellung in einer Ansicht senkrecht zu der Längsachse in Überdeckung sein. Diesbezüglich ist insbesondere hinsichtlich der Sicherungselement-Enden eine vollständige Überdeckung bevorzugt. Die Sicherungselement-Enden können sich in der Anlagestellung zu einem plattenförmigen Gesamtgebilde ergänzen.

Weiter bevorzugt ist in dieser Stellung der Sicherungselemente jedem Sicherungselement ein Schiebeteil zugeordnet, wobei das erste Schiebeteil des ersten Sicherungselements erst mit Erlangen der Verschlussstellung in eine Zusammenwirkungsstellung mit dem zweiten Schiebeteil verbringbar ist, wie auch das zweite Schiebeteil des zweiten Sicherungselements mit dem ersten Schenkel.

In vorteilhafter Weise kann das eine Schiebeteil oder können beide Schiebeteile in der Verschlussstellung verrastbar sein. Die Verrastung in der Verschlussstellung kann dabei durch eine Zusammenwirkung des Schiebeteil mit zumindest einem Sicherungselement-Ende, weiter bevorzugt mit beiden Sicherungselement-Enden, erreicht sein.

Eine solche Verrastung eines die Sicherung ergebenden Schiebeteils ist bevorzugt nur willensbetont aufhebbar. Nur durch eine solche gezielte Überwindung der Verrastung kann das Schiebeteil zurück in eine Ausgangsstellung verlagert werden, um so die gesicherte Verschlussstellung der Sicherungselemente aufzuheben.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Die Zeichnung zeigt:
- Fig. 1: in perspektivischer Darstellung einen Zurrbügel in einer ersten Ausführungsform, betreffend eine Anordnungsstellung an einer Ladefläche;
- Fig. 2: den Zurrbügel der ersten Ausführungsform in einer perspektivischen Darstellung, die Verschlussstellung eines Sicherungselements betreffend;
- Fig. 3: einen Ausschnitt eines Schenkelendes des Zurrbügels in einer Seitenansicht gemäß dem Pfeil III in Figur 2, die Verschlussstellung des Sicherungselements betreffend;
- Fig. 4: eine der Figur 3 entsprechende Darstellung, nach Verlagerung eines Rastteil-Abschnitts in einer Raststellung mit einer schenkelseitigen Nut;
- Fig. 5: den Zurrbügel in einer perspektivischen Explosionsdarstellung;
- Fig. 6: eine vergrößerte Ansichtsdarstellung eines Schenkelendes gemäß Pfeil VI in Figur 5;
- Fig. 7: eine der Figur 2 entsprechende Darstellung, jedoch eine Montagestellung des Sicherungselements betreffend;
- Fig. 8: den Bereich VIII in Figur 2 in vergrößerter Detaildarstellung;
- Fig. 9: die Unteransicht gegen ein Schenkelende gemäß Pfeil IX in Figur 8;
- Fig. 10: den Schnitt gemäß dem Schnittbereich X in Figur 8;
- Fig. 11: die perspektivische Unteransicht gemäß Pfeil XI in Figur 8;
- Fig. 12: das Sicherungselement des Zurrbügels der ersten Ausführungsform in einer Einzeldarstellung;
- Fig. 13: das Rastteil des Zurrbügels der ersten Ausführungsform in perspektivischer Einzeldarstellung;
- Fig. 14: das Rastteil in einer Seitenansicht;
- Fig. 15: den Zurrbügel in perspektivischer Darstellung, eine zweite Ausführungsform in der Verschlussstellung betreffend;
- Fig. 16: die perspektivische Unteransicht gegen den Zurrbügel der zweiten Ausführungsform gemäß Pfeil XVI in Figur 15;
- Fig. 17: den Zurrbügel der zweiten Ausführungsform in perspektivischer Explosionsdarstellung;
- Fig. 18: eine perspektivische Ausschnittdarstellung des Zurrbügels, die Montagestellung zweier Sicherungselemente betreffend;
- Fig. 19: den Bereich XIX in Figur 15, eine nicht gesicherte Anlagestellung der Sicherungselemente betreffend;
- Fig. 20: eine perspektivische Unteransicht gemäß Figur 16, im Zuge der Verlagerung von Schiebeteilen zur Sicherung der Verschlussstellung;
- Fig. 21: den Schnitt entlang der Linie XXI-XXI in Figur 15;
- Fig. 22: ein Sicherungselement der zweiten Ausführungsform in Einzeldarstellung;
- Fig. 23: das Schiebeteil der zweiten Ausführungsform in perspektivischer Einzeldarstellung;
- Fig. 24: das Schiebeteil in Ansicht gemäß Pfeil XXIV in Figur 23;
- Fig. 25: das Schiebeteil in einer Stirnansicht gemäß Pfeil XXV in Figur 23;
- Fig. 26: eine der Figur 2 im Wesentlichen entsprechende Darstellung, eine weitere Ausführungsform des Zurrbügels in der Verschlussstellung betreffend;
- Fig. 27: die Draufsicht auf den Zurrbügel gemäß Pfeil XXVII in Figur 26;
- Fig. 28: eine Seitenansicht gegen den Zurrbügel gemäß Pfeil XXVIII in Figur 26;
- Fig. 29: den Zurrbügel der weiteren Ausführungsform in explosionsperspektivischer Darstellung;
- Fig. 30: den Schnitt entlang der Linie XXX - XXX in Figur 27;
- Fig. 31: den Schnitt entlang der Linie XXXI - XXXI in Figur 27;
- Fig. 32: eine perspektivische Unteransicht gemäß Pfeil XXXII in Figur;
- Fig. 33: das Sicherungselement des Zurrbügel gemäß Figur 26 in einer Einzeldarstellung;
- Fig. 34: das Rastteil des Zurrbügel gemäß Figur 26 in einer perspektivischen Einzeldarstellung;
- Fig. 35: das Rastteil in einer Seitenansicht.

### Beschreibung der Ausführungsformen

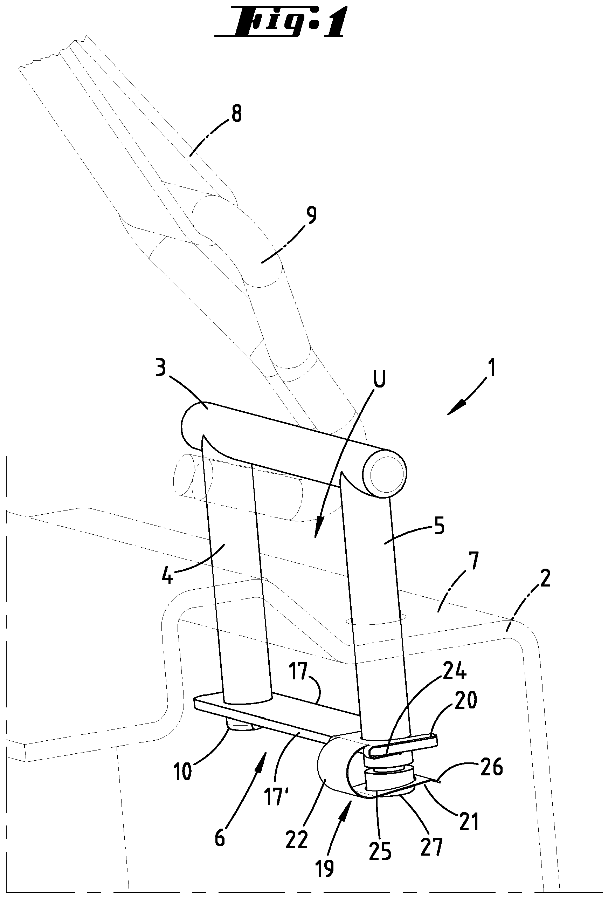

Dargestellt und beschrieben ist, zunächst mit Bezug zu Figur 1, ein Zurrbügel 1, welcher, wie in Figur 1 schematisch dargestellt, im Bereich einer Ladefläche 2 beispielsweise eines Lastkraftfahrzeugs befestigbar ist.

Der Zurrbügel 1 setzt sich im Wesentlichen zusammen aus einem im üblichen Nutzungszustand etwa horizontal verlaufenden Querholm 3, von welchem im Wesentlichen jeweils endseitig senkrecht zu der geometrischen Körperachse des Querholms 3 und gleichgerichtet ein erster Schenkel 4 und ein zweiter Schenkel 5 ausgehen. Endseitig dieser Schenkel 4 und 5 sind diese in der Nutzungs- beziehungsweise Bereitschaftsstellung des Zurrbügels 1 durch ein im Wesentlichen parallel zu dem Querholm 3 verlaufendes Sicherungselement 6 verbunden.

Der Zurrbügel 1 ist in der in Figur 1 dargestellten Nutzungsanordnung insgesamt im Wesentlichen entlang der Längsachse x beispielsweise des ersten Schenkels 4 aus einer Bereitschaftsstellung beziehungsweise Nichtgebrauchslage in eine Gebrauchslage verlagerbar. In dieser Gebrauchslage ragt die durch den Querholm 3 und den beiden Schenkeln 4 und 5 gebildete U-förmige Ausgestaltung U frei über die Oberfläche 7 der Ladefläche 2 hinaus. Bevorzugt ergibt sich dabei, insbesondere bei einer entsprechenden Belastung durch beispielsweise einen Spanngurt 8, welcher mit einem Haken 9 an dem Querholm 3 angreifen kann, eine Abstützung des Zurrbügels 1 unterseitig der Ladefläche 2 über das Sicherungselement 6.

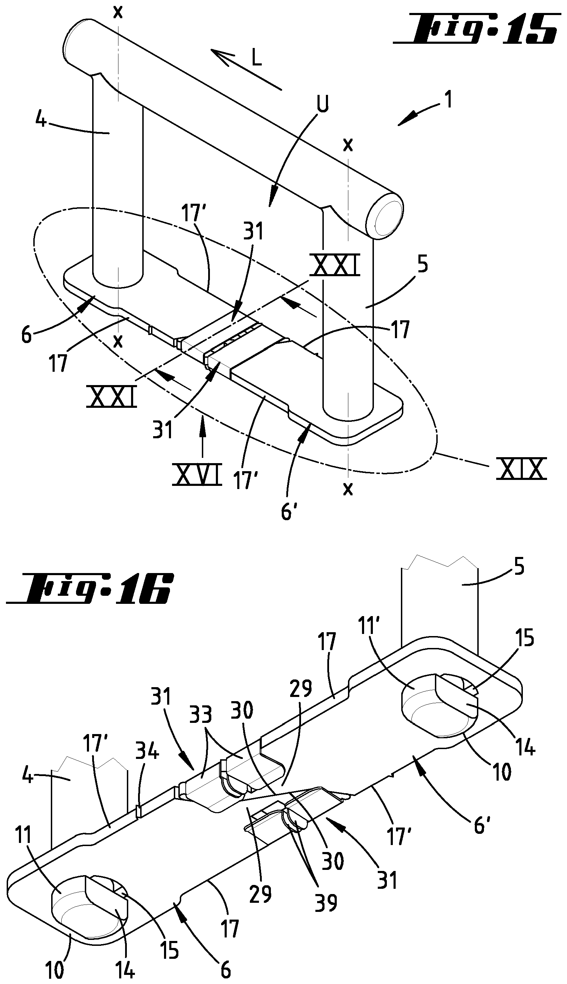

Die Figuren 1 bis 14 zeigen eine erste Ausführungsform und die Figuren 15 bis 25 eine zweite Ausführungsform eines solchen Zurrbügels 1.

Der erste Schenkel 4 der ersten Ausführungsform bildet an seinem freien Ende 10 eine starr mit dem ersten Schenkel 4, dabei weiter bevorzugt einteilig und materialeinheitlich mit dem Schenkel 4 ausgeformte Sicherungsausformung 11 aus, zur Zusammenwirkung mit dem Sicherungselement 6. Diese Sicherungsausformung 11 ist in Richtung der Längsachse x durch eine umlaufende Ringnut 12 zu dem ersten Schenkel 4 im Übrigen separiert. Dabei weist der erste Schenkel 4 im Übrigen bevorzugt einen Kreisquerschnitt mit einem Durchmesser d auf. Der sich durch die umlaufende Ringnut 12 ergebende, den ersten Schenkel 4 im Übrigen mit der Sicherungsausformung 11 verbindende Zapfen 13 weist bei konzentrischer Anordnung des Zapfens 13 zu dem ersten Schenkel 4 im Übrigen entsprechend einen gegenüber dem Durchmesser d verringerten Durchmesser d' auf.

Die Sicherungsausformung 11 kann, wie auch dargestellt, etwa hammerkopfartig ausgebildet sein. So weist die Sicherungsausformung 11 zunächst zwei parallel in einem dem Durchmesser d' entsprechenden Abstand parallel zueinander verlaufende Sekantenflächen 14 auf, welche jeweils endseitig in gegebenenfalls auf dem vergrößerten Durchmesser d des ersten Schenkels 4 im Übrigen verlaufende Kreisabschnittflächen übergehen.

Die in Richtung der Längsachse x betrachtete Höhe h der Ringnut 12 ist im Wesentlichen angepasst an die in derselben Richtung betrachtete Dicke b des insgesamt im Wesentlichen plattenförmigen Sicherungselements 6.

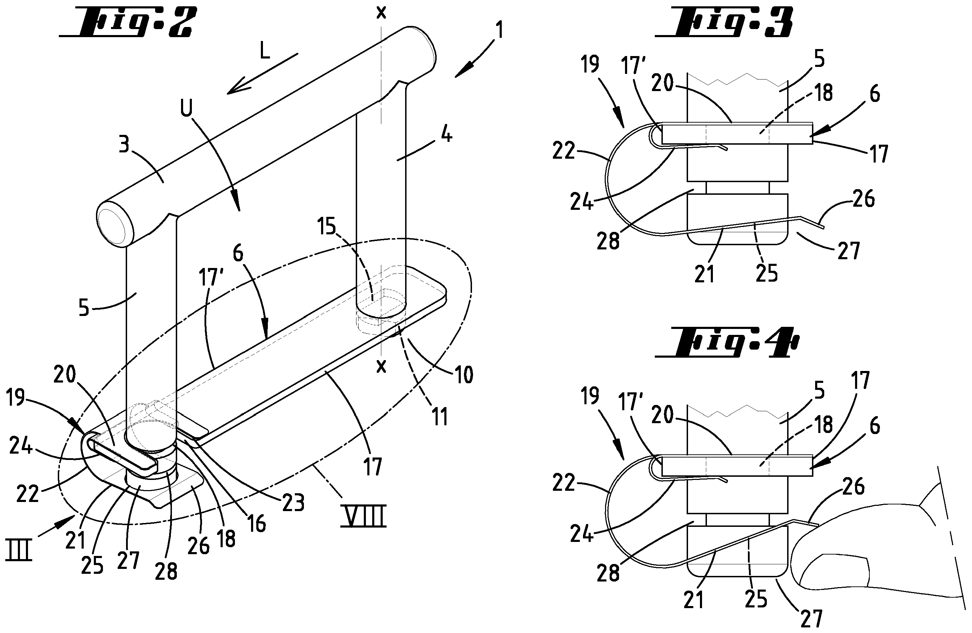

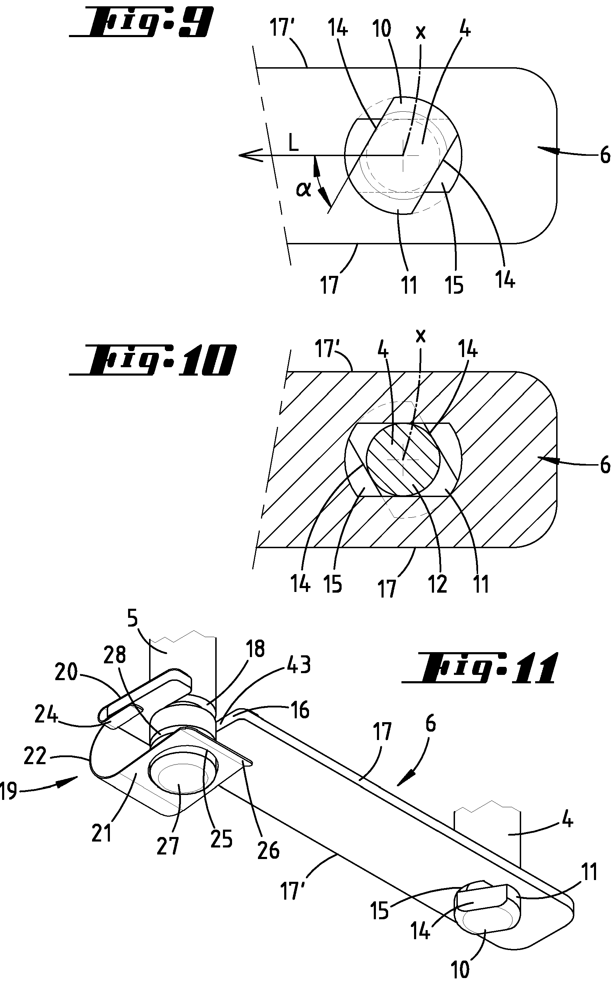

Das plattenförmige Sicherungselement 6 weist eine an die Querschnittsgestaltung der Sicherungsausformung 11 angepasste Stecköffnung 15 auf. Die Sekantenflächen dieser Stecköffnung 15 können, wie auch bevorzugt und dargestellt, in Längsausrichtung des Sicherungselements 6, entsprechend in der in Figur 2 dargestellten Verschlussstellung im Wesentlichen parallel ausgerichtet zu der Längserstreckung L des Querholms 3 verlaufen. Die Sekantenflächen 14 der schenkelseitigen Sicherungsausformung 11 hingegen erstrecken sich mit Bezug auf einen Querschnitt quer zur Längsachse x in einem spitzen Winkel α zu der Längserstreckung L des Querholms 3 beziehungsweise zu einer Längsachse des Querholms 3. Dieser spitze Winkel α kann etwa 30 bis 60°, weiter beispielsweise etwa 45° betragen (vgl. Figur 9).

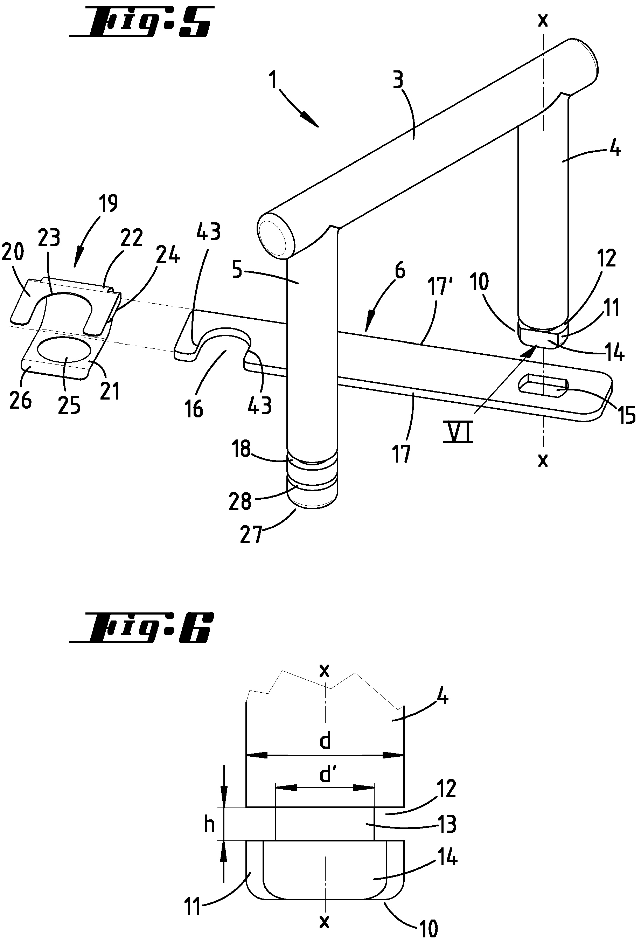

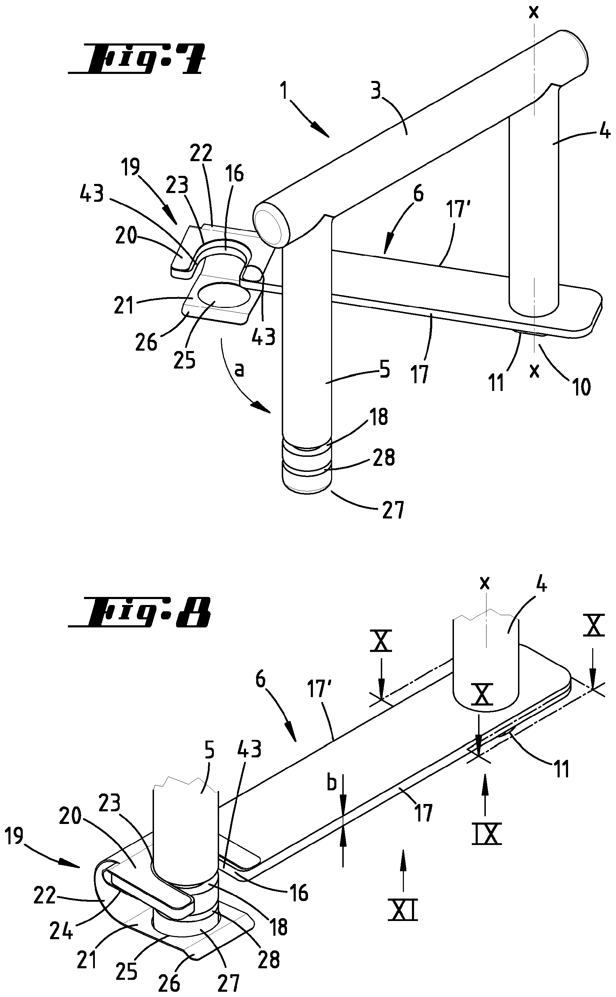

Es ergibt sich hiermit eine Montagestellung, in welcher das Sicherungselement 6 mit dem der Stecköffnung 15 abgewandten Ende nicht mit dem zweiten Schenkel 5 zur Erreichung der Verschlussstellung zusammenwirken kann. Ausgehend von einer Stellung gemäß Figur 5 wird im Schlüssel-Schlüsselloch-Prinzip die Stecköffnung 15 des Sicherungselements 6 unter entsprechender und angepasster Ausrichtung in Richtung der Längsachse x über die Sicherungsausformung 11 bis in den Bereich der Ringnut 12 geschoben. Diese Montagestellung ist in Figur 7 dargestellt. Durch Verschwenken des Sicherungselements 6 um die Längsachse x des ersten Schenkels 4 ist hiernach das Sicherungselement 6 in Richtung auf die Verschlussstellung verlagerbar, wobei mit Verlassen der Montagestellung durch die Verschwenkung eine Aufhebung der Montagestellung allein durch eine Verlagerung des Sicherungselements 6 in Richtung der Längsachse x unterbunden ist. Durch die gegebene schlüssellochartige Gestaltung der Stecköffnung 15 ist mit Verschwenken des Sicherungselements 6 aus der Montagestellung heraus das Sicherungselement 6 in der Ringnut 12 gefangen.

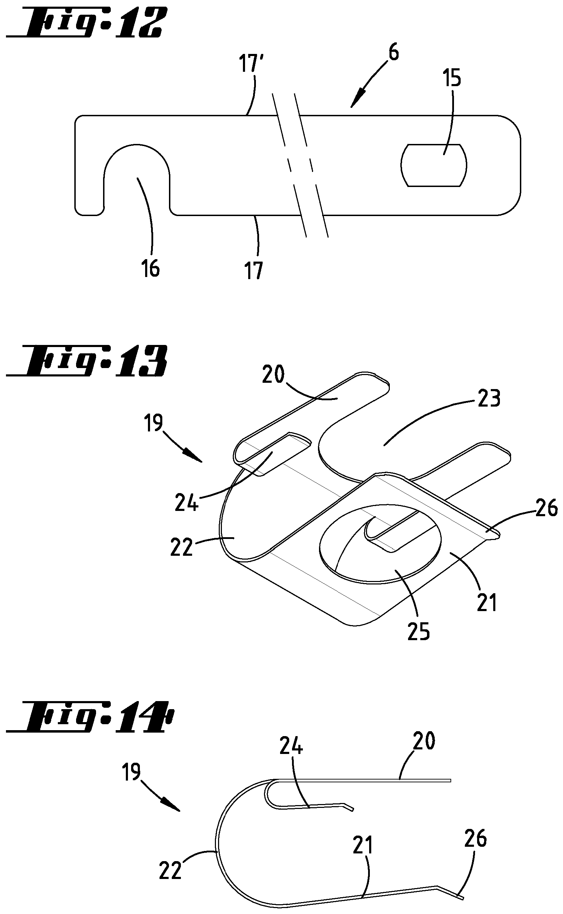

Das Sicherungselement 6 weist weiter im Bereich seines der Stecköffnung 15 abgewandten Endes eine Aufnahmeöffnung 16 auf, welche zur Aufnahme des freien Endbereiches des zweiten Schenkels 5 in einem Grundriss gemäß Figur 12 hinsichtlich ihrer Randkontur U-förmig gestaltet ist. Die Aufnahmeöffnung 16 ist zu einem Längsrand 17 des Sicherungselements 16 hin randoffen gestaltet.

Insbesondere die Öffnungsweite zwischen zwei im Wesentlichen senkrecht zu den Längsrändern 17 und 17' und parallel zueinander verlaufenden Randkanten 43 der Aufnahmeöffnung 16 ist bevorzugt angepasst an einen reduzierten Durchmesser des zweiten Schenkels 5 im Bereich einer auch hier bevorzugt umlaufend vorgesehenen Ringnut 18. In diese Ringnut 18 kann das Sicherungselement 6 nach einem Verschwenken desselben aus der Montagestellung gemäß Figur 7 in Pfeilrichtung a in die Verschlussstellung mit der umlaufenden Randkante der Aufnahmeöffnung 16 zur Sicherung des Sicherungselements 6 in Achsrichtung des zweiten Schenkels 5 eingreifen.

Der zweite Schenkel 5 ragt in Achsrichtung frei über die vorbeschriebene Ringnut 18 hinaus, bevorzugt zur Zusammenwirkung mit einem an dem Sicherungselement 6 befestigten Rastteils 19.

Das Rastteil 19 kann, wie auch bevorzugt und auch in den Figuren 13 und 14 dargestellt, ein Biegeteil aus Federblech sein. Dieses weist zunächst und im Wesentlichen mit Bezug auf eine Anordnungsstellung des Rastteils 19 an dem Sicherungselement 6 quer zur Längserstreckung des Sicherungselements 6 eine U-förmige Gestaltung auf, mit einem oberen Halterungsabschnitt 20 und einem mit Abstand etwa parallel hierzu verlaufenden unteren Rastabschnitt 21. Der Halterungsabschnitt 20 und der Rastabschnitt 21 sind über einen gekrümmt verlaufenden Stegabschnitt 22 miteinander verbunden.

Der Halterungsabschnitt 20 ist mit einer an die Aufnahmeöffnung 16 des Sicherungselements 6 im Wesentlichen angepassten, zu dem dem Stegabschnitt 22 abgewandten Rand randoffenen Öffnung 23 versehen. Der Halterungsabschnitt 20 liegt in der üblichen Nutzungsstellung auf der dem Querholm 3 zugewandten Oberfläche des Sicherungselements 6 auf, wobei die Öffnung 23 die Aufnahmeöffnung 16 im Wesentlichen flankiert.

Dieser Halterungsabschnitt 20 ist zugewandt dem Stegabschnitt 22 mit zufolge Freischnitt und Biegung einstückig und materialeinheitlich ausgebildeten Untergreifabschnitten 24 versehen, welche in der Nutzungsstellung den zugewandten Randbereich des Sicherungselements 6 umgreifen und unter Zusammenwirkung mit der Sicherungselement-Unterseite eine Festsetzung des Rastteils 19 an dem Sicherungselement 6 durch Klemmung bewirken. Diese Klemmwirkung ist durch die federnden Eigenschaften des gewählten Rastteil-Materials unterstützt.

Der in der unbelasteten Grundstellung beispielsweise gemäß Figur 1 3 in axialer Richtung des zweiten Schenkels 5 zu dem Halterungsabschnitt 20 beabstandete Rastabschnitt 21 weist eine umfangsmäßig geschlossene Halteöffnung 25 auf. Diese ist mit Bezug auf einen Grundriss bevorzugt kreisrund gestaltet, mit einem Durchmesser, der an den Außendurchmesser des zweiten Schenkels 5 angepasst ist.

Das freie Ende des Rastabschnittes 21 ist mit einer, eine Aussteuerschräge bildenden Abwinklung 26 versehen.

Der Rastabschnitt 21 erstreckt sich frei mit Abstand unterhalb des Sicherungselements 6.

Mit Schwenkverlagerung des Sicherungselements 6 um die Längsachse x des ersten Schenkels 4 aus der Montagestellung gemäß Figur 7 in Richtung auf die Verschlussstellung gemäß Figur 2 tritt das Sicherungselement 6 mit dessen Rastteil 19, insbesondere mit der Abwinklung 26, gegen den freien Endbereich des zweiten Schenkels 5, was eine Aussteuerbewegung des Rastabschnittes 21 entgegen der federnden Rückstellkraft des Stegabschnittes 22 auslöst. Der Rastabschnitt 21 kann zufolge dieser Aussteuerbewegung das freie Ende 27 des zweiten Schenkels 5 im Zuge der Schwenkverlagerung des Sicherungselements 6 zunächst unterlaufen, bis in eine Schwenkstellung, in welcher die Halteöffnung 25 etwa in eine axiale Überdeckung zu dem zweiten Schenkel 5 gelangt. Aufgrund der Federrückstellung ergibt sich in dieser Position eine Rückstellung des Rastabschnittes 21 zumindest annähernd hin in dessen unbelastete Grundstellung, womit das freie Ende des zweiten Schenkels 5 in der Halteöffnung 25 des Rastteils 19 gefangen ist (vergleiche beispielsweise Figur 3).

Im Zuge dieses Unterlaufens und Einfangens des freien Endes des zweiten Schenkels 5 durch den Rastabschnitt 21 des Rastteils 19 ist auch der Formschluss zwischen der Aufnahmeöffnung 16 des Sicherungselements 6 sowie bevorzugt auch der Öffnung 23 des Halterungsabschnittes 20 des Rastteiles 19 mit der schenkelseitigen Ringnut 18 erreicht.

Das Sicherungselement 6 ist hiernach in der Verschlussstellung durch das Rastteil 19 an einer Rückverlagerung aus der Verschlussstellung in Richtung auf die Montagestellung gehindert.

Durch eine mögliche manuelle Verlagerung des Rastabschnittes 21 entgegen der federnden Rückstellkraft des Rastteils 19 kann willensbetont diese Sicherungsstellung aufgehoben werden, wonach eine Rückverschwenkung des Sicherungselements 6 in Richtung auf die Montagestellung ermöglicht ist.

Auch kann gegebenenfalls durch einen manuellen Eingriff, wie in Figur 4 schematisch dargestellt, eine Rastfestlegung des Rastabschnitts 21 in der Sicherungsstellung vorgenommen werden, indem der Rastabschnitt 21 in Richtung auf eine zwischen der die Aufnahmeöffnung 16 aufnehmenden Ringnut 18 und dem freien Ende 27 weiter ausgeformte Rastnut 28 angehoben wird, um mit einem Abschnitt der umlaufenden Randkante der Halteöffnung 25 des Rastteils 19 in diese Rastnut 28 einzugreifen.

Die in den Figuren 15 bis 25 dargestellte zweite Ausführungsform weist im wesentlichen Unterschied zu der vorbeschriebenen Ausführungsform zwei Sicherungselemente 6 und 6' auf. Auch diese sind bevorzugt plattenartig gestaltet, darüber hinaus, wie auch dargestellt, gleich gestaltet, wie auch weiter bevorzugt die beiden Schenkel 4 und 5 des Zurrbügel 1 in dieser Ausführungsform im Wesentlichen gleich gestaltet sind.

So sind beide freien Enden 10 und 27 des ersten Schenkels 4 und des zweiten Schenkels 5 mit, wie vorbeschrieben näher ausgeführt, gleich gestalteten hammerkopfartigen Sicherungsausformungen, einer ersten Sicherungsausformung 11 und einer zweiten Sicherungsausformung 11', versehen. Die beiden Sicherungselemente 6 und 6' können entsprechend wahlweise dem einen oder dem anderen Schenkel zugeordnet und hieran angeordnet werden.

Beide Sicherungselemente 6 und 6' verfügen jeweils über eine an die Sicherungsausformungen 11 und 11' der beiden Schenkel 4 und 5 angepasste Stecköffnung 15.

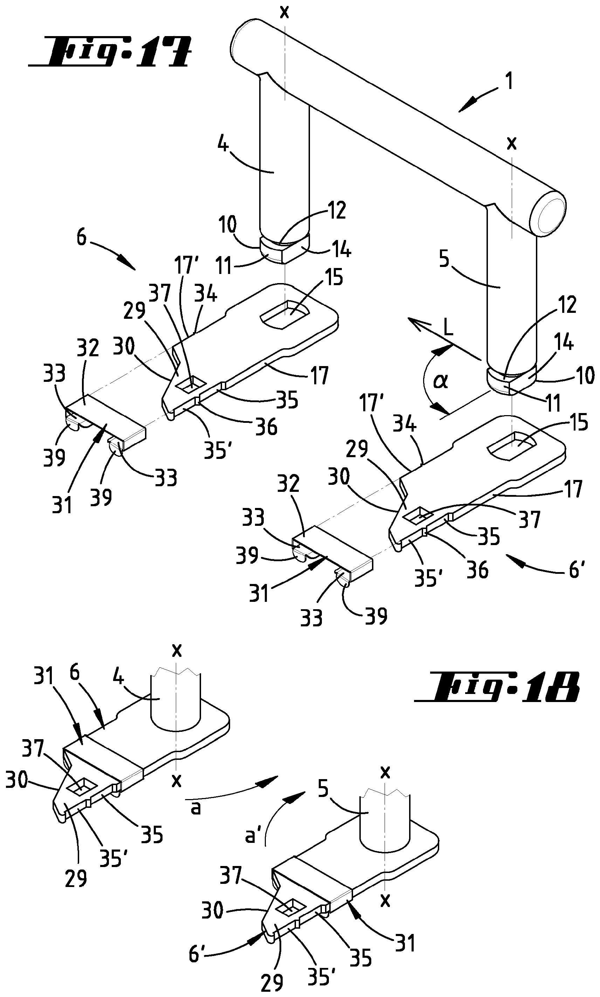

Im Unterschied zu der vorbeschriebenen Ausführungsform kann in der zweiten Ausführungsform die Ausrichtung der Sicherungsausformungen 11 so gewählt sein, dass mit Bezug auf eine Projektion in eine quer zu der Längsachse x verlaufenden Ebene die Sekantenfläche 14 der Sicherungsausformungen 11 beziehungsweise 11' beispielsweise etwa einen Winkel α von 90° zu der Längserstreckung L beziehungsweise zu einer geometrischen Körperachse des Querholms 3 einschließen können (vergleiche Figur 17).

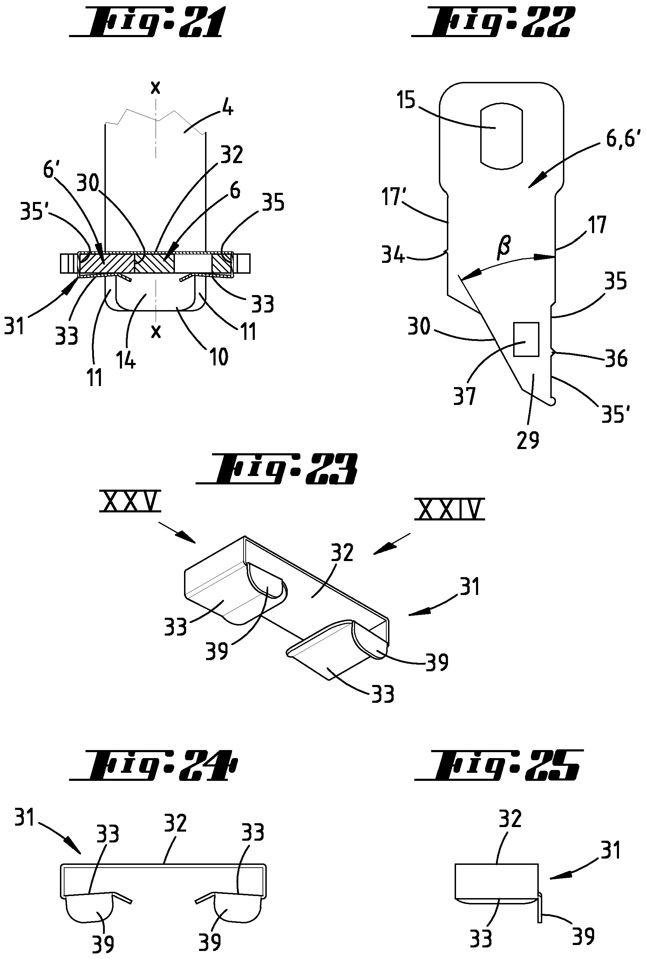

Jedes Sicherungselement, das erste Sicherungselement 6 und das zweite Sicherungselement 6', weist im Bereich ihres jeweils freien Sicherungselement-Endes 29 einen mit Bezug auf einen Grundriss gemäß Figur 22 in einem spitzen Winkel β zu dem Längsrand 17 verlaufenden Anschlagrand 30 auf. Dieser kann, beide Längsränder des jeweiligen Sicherungselements 6 beziehungsweise 6' verbindend, in seinem Grundrissverlauf stufig gestaltet sein.

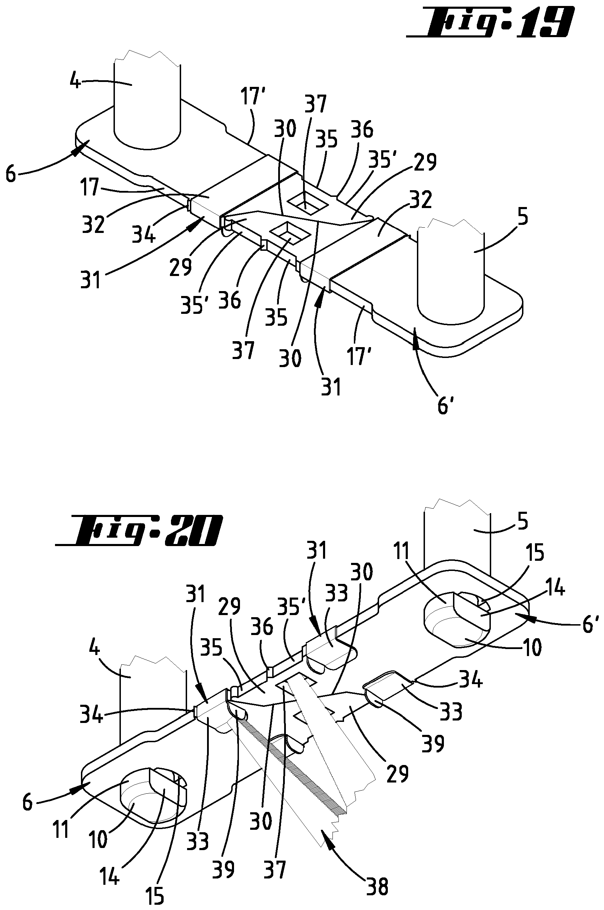

Der Verlauf der Anschlagränder 30 beider Sicherungselemente 6 und 6' ist gleich und aneinander angepasst gewählt, sodass sich in der Verschlussstellung gemäß der Darstellung in Figur 19 bevorzugt eine vollflächige Anlage der Sicherungselemente 6 und 6' entlang ihrer Anschlagränder 30 ergibt. Dabei sind die diesbezüglichen Sicherungselement-Enden 29, darüber hinaus in bevorzugter Ausgestaltung die Sicherungselemente 6 und 6' insgesamt, in einer Ansicht senkrecht zu der Längsachse x, wie sich eine solche Ansicht auch beispielsweise in der Schnittdarstellung in Figur 21 ergibt, in Überdeckung. Weiter bevorzugt ist diesbezüglich eine vollständige Überdeckung der Sicherungselemente 6 und 6' in dieser Ansicht wie auch in einer entsprechenden Ansicht gegen den Längsrand 17 beziehungsweise den gegenüberliegenden Längsrand 17'.

Aus der Montagestellung gemäß Figur 18 kann bei - wie dargestellt - gleichgerichteter Ausrichtung der Sicherungselemente 6 und 6' zunächst beispielsweise das erste Sicherungselement 6 bevorzugt etwa 90° in Pfeilrichtung a in die Verschlussstellung verschwenkt werden, gefolgt von einer entsprechenden Verschwenkung des zweiten Sicherungselements 6' in entgegengesetzter Schwenkrichtung (Pfeilrichtung a') bis in die Anlagestellung an das erste Sicherungselement 6.

Auch können die Sicherungselemente 6 und 6' in entgegengesetzte Richtungen weisend montiert werden. Das Verschwenken in die Verschlussstellung erfolgt dabei bezüglich der Schwenkrichtungen beider Sicherungselemente 6 und 6' gleichgerichtet und kann zugleich erfolgen.

In der Verschlussstellung, wie diese beispielsweise in Figur 19 dargestellt ist, verlaufen die Längsränder 17 und 17' beider Sicherungselemente 6 und 6' ineinander übergehend.

Diese Verschlussstellung der Sicherungselemente 6 und 6' ist sicherbar durch Herstellung einer Verbindung der Sicherungselemente 6 und 6' untereinander. Hierzu sind in dem dargestellten Ausführungsbeispiel Schiebeteile 31 vorgesehen. Bevorzugt ist in der Montagestellung beziehungsweise der noch nicht gesicherten Freigabestellung der Sicherungselemente 6 und 6' in der Montagestellung jedem Sicherungselement ein solches Schiebeteil 31 zugeordnet.

Ein solches Schiebeteil 31 ist in den Figuren 23 bis 25 in Einzeldarstellungen gezeigt. Wie ersichtlich, ergibt sich hinsichtlich des Schiebeteils 31 eine insgesamt C-förmige Gestaltung, mit einem sich in der Zuordnungsstellung über die gesamte Breite zwischen den Längsrändern 17 und 17' des Sicherungselements erstreckenden und oberseitig flächig aufliegenden Übergriffabschnitt 32 und zwei die Längsränder 17, 17' umfassenden, an der Unterseite des Sicherungselements anliegenden Untergreifabschnitten 33.

Das Schiebeteil 31 kann als Biegeteil aus einem Federblech gebildet sein.

Weiter sind die Schiebeteile 31 zur Verlagerung entlang der Längsränder 17, 17' und somit in Richtung einer Längserstreckung der Sicherungselemente ausgebildet. In der Montagestellung gemäß Figur 18 umfasst ein solches Schiebeteil 31 vollständig das zugeordnete Sicherungselement 6 beziehungsweise 6' in einem Elementbereich vor dem ausgebildeten Anschlagrand 30. Es kann beispielsweise an dem Längsrand 17' des Sicherungselements 6 beziehungsweise 6' eine Anschlagrippe 34 angeformt sein, die eine Verlagerung des Schiebeteils 31 weiter in Richtung der Aufnahmeöffnung 16 und somit in Richtung der Schenkel 4, 5 hindert.

Im Bereich des in das Sicherungselement-Ende 29 einlaufenden längeren Längsrandes 17 können gegenüber der Längsrandfläche - mit Bezug auf die Grundrissgestaltung gemäß Figur 22 - nach innen weisende Rastvertiefungen 35 ausgebildet sein. Dargestellt sind diesbezüglich zwei in Erstreckungsrichtung des Längsrandes 17 hintereinander angeordnete und durch eine Anschlagrippe 36 zueinander getrennte Rastvertiefungen 35 und 35'.

Zur Erlangung der gesicherten Verschlussstellung, beispielsweise gemäß den Darstellungen in den Figuren 15 und 16, werden die Schiebeteile 31 bevorzugt nacheinander in Richtung auf die Sicherungselement-Enden 29 schiebeverlagert, wodurch das Schiebeteil 31 des ersten Sicherungselements 6 federunterstützt in die Rastvertiefung 35 dieses ersten Sicherungselements 6 einfällt und zugleich gegenüberliegend in die zweite Rastvertiefung 35' des zweiten Sicherungselements 6'. Darüber hinaus wird auch das weitere Schiebeteil 31 des zweiten Sicherungselements 6' derart schiebeverlagert, dass das Schiebeteil 31 federunterstützt in die Rastvertiefung 35 des zweiten Sicherungselements 6' und zugleich in die gegenüberliegende Rastvertiefung 35' des ersten Sicherungselements 6 einfallen kann (vergleiche insbesondere Figur 16).

Die durch die Schiebeteile 31 klammerartig miteinander verbundenen Sicherungselemente 6 und 6' sind hierdurch in der Montagestellung an einer Schwenkrückverlagerung in Richtung auf die Montagestellung gehindert.

Im Bereich der Sicherungselement-Enden 29 können weiter, im Wesentlichen zugeordnet der ersten Rastvertiefung 35, fensterartige Ausnehmungen 37 vorgesehen sein. In diese kann in der Sicherungs-Verlagerungsstellung eines Schiebeteils 31 zumindest ein Teilabschnitt eines zugeordneten Untergreifabschnitts 33 rastend einfallen.

Auch können diese Ausnehmungen 37 zum Ansetzen eines Werkzeuges 38, beispielsweise einer Zange (vergleiche Figur 20), dienen, wobei ein Zangenmaulschenkel in die Ausnehmung 37 greift und der weitere Zangenmaulschenkel an einer an einem Untergreifabschnitt 33 abgewinkelten Lasche 39. Zufolge Betätigung des Werkzeugs 38, entsprechend beispielsweise zufolge Betätigung der Zange, wird so das Schiebeteil 31 in Richtung auf die Sicherungsstellung verlagert.

Auch kann mithilfe des Werkzeugs 38, beispielsweise mithilfe einer Zange, zugleich an den Laschen beider Schiebeteile 31 angesetzt werden, um diese zugleich aufeinander zu in die Sicherungsstellung zu bewegen.

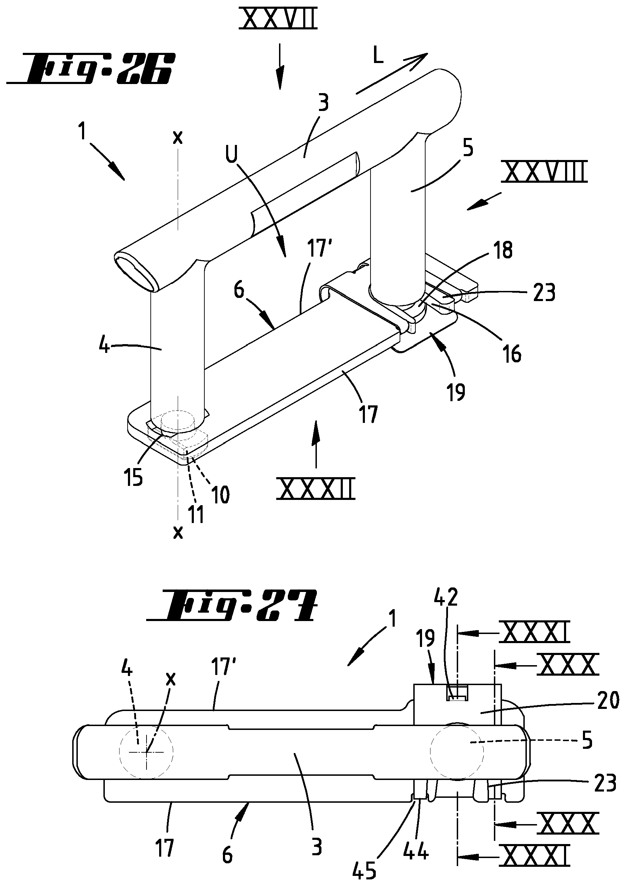

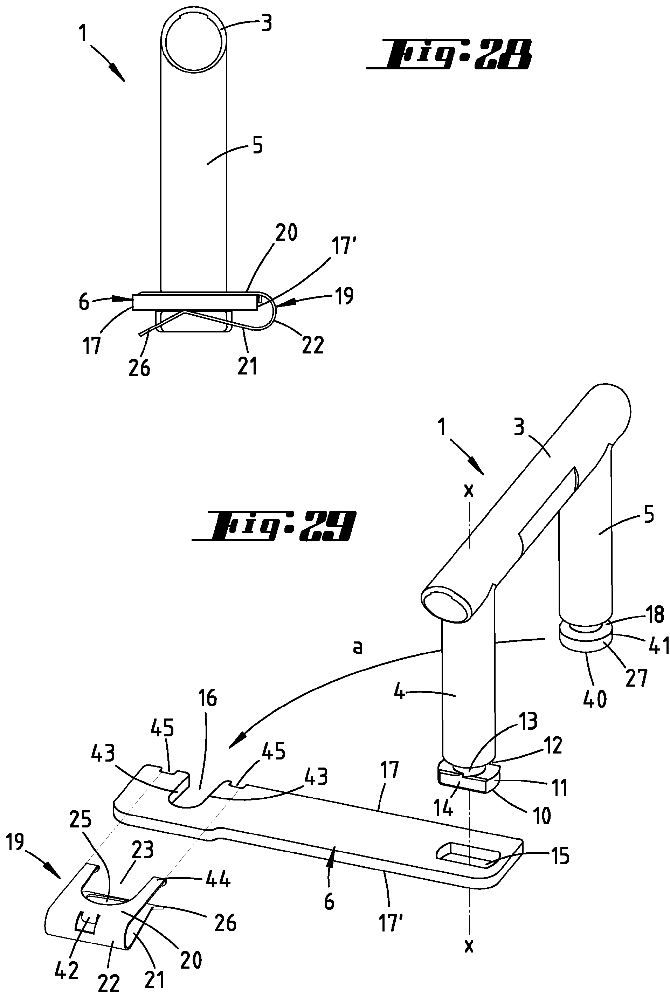

Die Figuren 26 bis 35 zeigen eine weitere Ausführungsform eines Zurrbügels 1, welche im Wesentlichen auf der in den Figuren 1 bis 14 dargestellten ersten Ausführungsform basiert.

Es ist auch hier ein einteiliges Sicherungselement 6 vorgesehen, mit einer zum Längsrand 17 offenen Aufnahmeöffnung 16. Diese ist geeignet zur sichernden Zusammenwirkung mit einer auch in dieser Ausführungsform in Richtung der Achse x zu dem Ende 27 des zweiten Schenkels 5 beabstandeten, umlaufenden Ringnut 18.

Zwischen der Ringnut 18 und der Endfläche 40 des Schenkelendes 27 ergibt sich in dieser Ausführungsform eine rücksprungfreie, entsprechend bevorzugt eine durchgehend zylinderförmige Außenfläche 41.

Die Sekantenfläche 14 der an dem ersten Schenkel 4 ausgebildeten Sicherungsausformung 11 schließt mit Bezug auf eine Grundriss, in welchem sich die Achse x als Punkt darstellt, einen Winkel α von bevorzugt 90° zu der Längserstreckung L des Sicherungselements 6 ein.

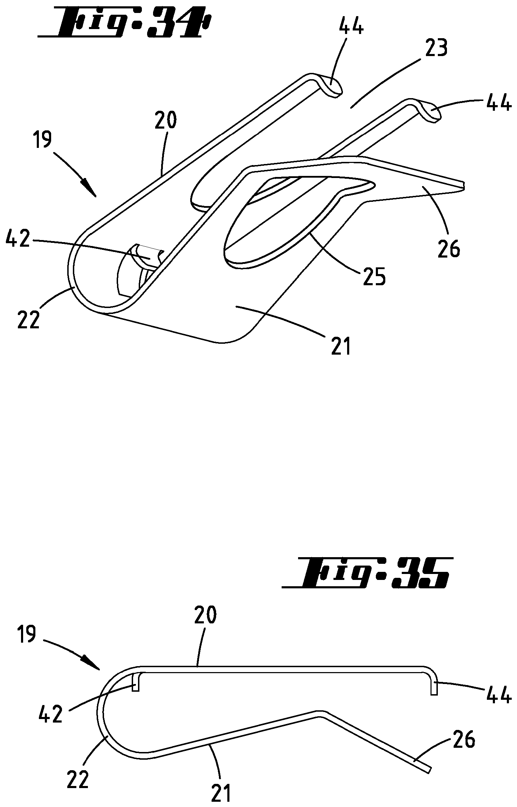

Das ebenfalls in dieser Ausführungsform an dem Sicherungselement 6 klemmhalterbare Rastteil 19 kann, wie auch bevorzugt und in den Figuren 34 und 35 dargestellt, ein Biegeteil aus Federblech sein.

Zugeordnet dem Stegabschnitt 22 des auch hier in einer Seitenansicht gemäß Figur 35 im Wesentlichen U-förmigen Rastteils 19 kann - mit Bezug auf die Anordnungsstellung des Rastteils 19 an dem Sicherungselement 6 - in Längserstreckung L betrachtet bevorzugt mittig ein zufolge Freischnitt gegenüber dem Stegabschnitt 22 eingebogener Anlageabschnitt 42 freigestellt sein, mittels welchem sich das Rastteil 19 in der Anordnungsstellung an dem der Aufnahmeöffnung 16 gegenüberliegenden Längsrand 17' abstützen kann. Der Längsrand 17' kann hierzu weiter in dem die Aufnahmeöffnung 16 überspannenden Bereich gegenüber dem Längsrand 17' im Übrigen gestuft verlaufen, so dass sich im Bereich der Aufnahmeöffnung 16 eine Abstandsvergrößerung des Längsrandes 17' zu dem gegenüberliegend und bevorzugt durchgehend geradlinig verlaufenden Längsrand 17 ergibt.

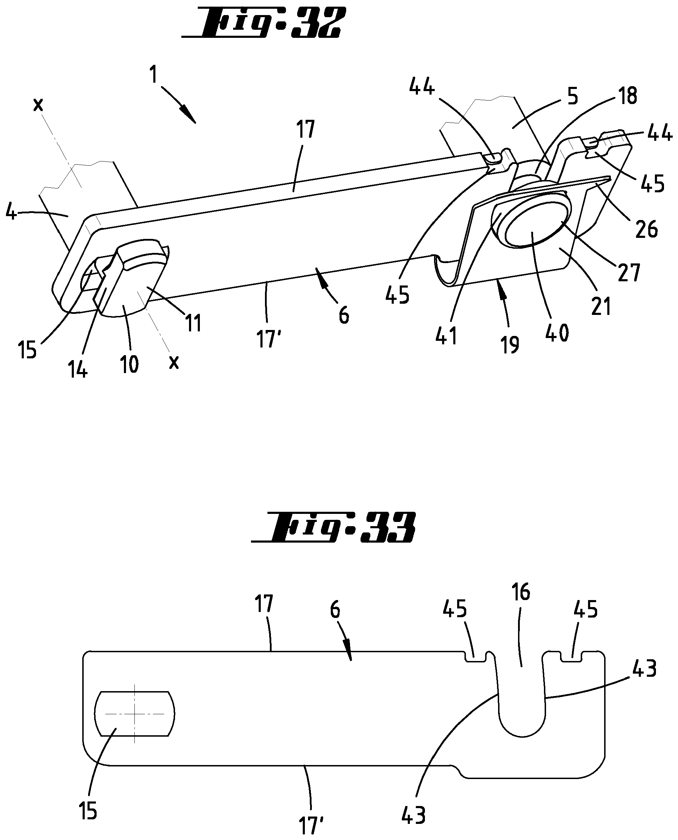

Die Randkanten 43 der Aufnahmeöffnung 16 verlaufen mit Bezug auf eine Draufsicht gemäß Figur 33 auf das Sicherungselement 6 jeweils entlang eines Kreislinienabschnitts, dessen Radius sich weiter bevorzugt - mit Bezug auf eine Anordnungsstellung des Sicherungselements 6 an dem Zurrbügel 1 - auf die Achse x des ersten Schenkels 4 bezieht. Es ergibt sich entsprechend eine in Schwenkrichtung des Sicherungselements 6 gebogen verlaufende Aufnahmeöffnung 16, zum formschlüssigen Einfangen der an dem zweiten Schenkel 5 ausgebildeten Ringnut 18.

Im Bereich der die Öffnung 23 beidseitig begrenzenden Halterungsabschnitte 20 des Rastteils 19 sind jeweils endseitig zur Anlage an dem Längsrand 17 des Sicherungselements 6 geeignete Anlageabschnitte 44 durch Biegung ausgebildet. Diese Anlageabschnitte 44 liegen in der Anordnungsstellung bevorzugt in nischenartigen Rücksprüngen 45 des Längsrandes 17 ein, wodurch eine Rastfestlegung des Rastteils 19 an dem Sicherungselement 6 erreicht ist.

Die Öffnung 25 in dem Rastteil 19 erstreckt sich in dem beschriebenen Ausführungsbeispiel sowohl über einen Teilbereich des Rastabschnittes 21 als auch über einen anschließenden Teilabschnitt der Abwinklung 26.

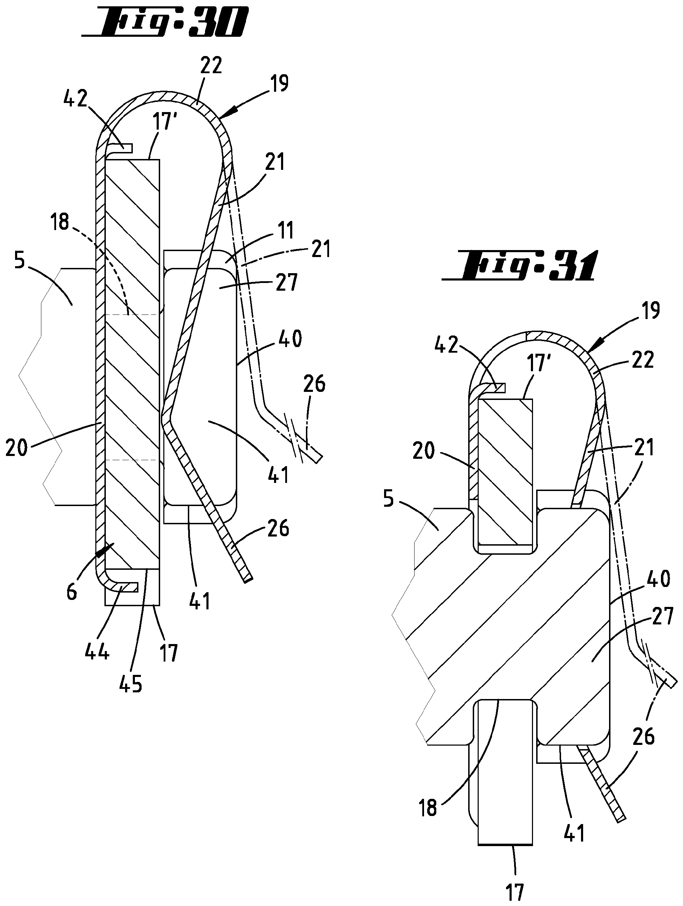

Mit Einnahme der Sicherungsstellung gemäß den Figuren 26 bis 28 sowie 30 und 31 ist das freie Ende 27 des zweiten Schenkels 5 durch die Öffnung 25 des Rastteils 19 eingefangen. Der Öffnungsrand umfängt den Schenkel 5 geschlossen umlaufend. Der die Öffnung 25 aufweisende Rastabschnitt 21 des Rastteils 19 stütz sich federbelastet im Bereich dessen Übergangs in die Abwinklung 26 benachbart zu der Aufnahmeöffnung 17 des Sicherungselements 6 unterseitig an der zugewandte Fläche des Sicherungselements 6 ab (vergleiche Figur 30), unter Umfassung des zugeordneten Endes 27 des zweiten Schenkels 5.

Die Sicherungsstellung ist auch hier selbsttätig zufolge Aussteuerung des Rastabschnitts 21 durch den, den Abschnitt der Abwinklung 26 im Zuge der Verschwenkung des Sicherungselements 6 beaufschlagenden zweiten Schenkel 5 erreichbar. Mit Überlaufen des Endes 27 fällt der Rastabschnitt 21 selbsttätig in die Raststellung.

Eine Aufhebung der Rastsicherung kann willensbetont unter manueller Verlagerung des Rastabschnitts 21 in eine die Rückschwenkung des Sicherungselements 6 ermöglichende Stellung erreicht werden (siehe strichpunktierte Darstellung in den Figuren 30 und 31).

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Ein Zurrbügel, der dadurch gekennzeichnet ist, dass das Sicherungselement 6, 6' zwischen einer Montagestellung, in der die Sicherungsausformung 11 durch das Sicherungselement 6, 6' überlaufbar ist, und einer Verschlussstellung, in der die Sicherungsausformung 11 durch das Sicherungselement 6, 6' nicht überlaufbar ist, um die Längsachse x verschwenkbar ist.

Ein Zurrbügel, der dadurch gekennzeichnet ist, dass die Sicherungsausformung 11 starr mit dem Schenkel 4, 5 verbunden ist.

Ein Zurrbügel, der dadurch gekennzeichnet ist, dass die Sicherungsausformung 11 einteilig an dem Schenkel 4, 5 angeformt ist.

Ein Zurrbügel, der dadurch gekennzeichnet ist, dass das Sicherungselement 6 zur Verbindung mit beiden Schenkeln 4, 5 ausgebildet ist.

Ein Zurrbügel, der dadurch gekennzeichnet ist, dass das Sicherungselement 6 an dem ersten Schenkel 4 in der Verschlussstellung durch die Sicherungsausformung 11 gehaltert ist und an dem zweiten Schenkel 5 durch ein an dem Sicherungselement 6 ausgebildetes vorgesehenes Rastteil 19 gehaltert ist.

Ein Zurrbügel, der dadurch gekennzeichnet ist, dass das Sicherungselement 6 zur Halterung an dem zweiten Schenkel 5 eine Aufnahmeöffnung 16 aufweist, in welche das den Querholm 3 abgewandte Ende 10 des zweiten Schenkels 5 im Zuge der Verschwenkung des Sicherungselements 6 um das Ende 10 des ersten Schenkels 4 aufnehmbar ist.

Ein Zurrbügel, der dadurch gekennzeichnet ist, dass der zweite Schenkel 5 eine Aussparung aufweist zur formschlüssigen Zusammenwirkung mit dem Sicherungselement 6 in der Verschlussstellung.

Ein Zurrbügel, der dadurch gekennzeichnet ist, die Aussparung eine Ringnut 18 ist.

Ein Zurrbügel, der dadurch gekennzeichnet ist, dass das Rastteil 19 durch das Ende 27 des zweiten Schenkels 5 im Zuge einer Aufnahme in der Aufnahmeöffnung 16 aus einer Raststellung in eine Freigabestellung bewegbar ist.

Ein Zurrbügel, der dadurch gekennzeichnet ist, dass das Rastteil 19 die Raststellung ausgehend von der Freigabestellung selbsttätig einnimmt.

Ein Zurrbügel, der dadurch gekennzeichnet ist, dass das Rastteil 19 in der Verschlusstellung mit einer in seiner Kontur rücksprungfrei bis zu einer Endfläche 40 des zweiten Schenkels 5 durchgehenden Außenfläche 41 des zweiten Schenkels 5 zusammenwirkt zur Zusammenwirkung mit einer an dem zweiten Schenkel 5 ausgebildeten Rastnut 28 geformt ist.

Ein Zurrbügel, der dadurch gekennzeichnet ist, dass das Rastteil 19 eine Halteöffnung 25 aufweist, zur Aufnahme des Endes in welche das Ende 27 des zweiten Schenkels 5 bei der Bewegung des Rastteils 19 aus der Freigabestellung in die Raststellung einfährt.

Ein Zurrbügel, der dadurch gekennzeichnet ist, dass das Rastteil 19 mit dem Sicherungselement 6 verbunden ist.

Ein Zurrbügel, der dadurch gekennzeichnet ist, dass die Aufnahmeöffnung 16 für das Ende 27 des zweiten Schenkels 5 U-förmig ist.

Ein Zurrbügel, der dadurch gekennzeichnet ist, sowohl der erste als auch der zweite Schenkel 4, 5 eine erste und eine zweite Sicherungsausformung 11, 11' aufweist, die durch Verschwenken des Sicherungselements 6, 6' um die Längsachse x überlaufbar sind.

Ein Zurrbügel, der dadurch gekennzeichnet ist, dass zwei Sicherungselemente 6, 6' ausgebildet sind, ein erstes und ein zweites Sicherungselement 6, 6', wobei das erste Sicherungselement 6 mit dem ersten Schenkel 4 zusammenwirkt und das zweite Sicherungselement 6' mit dem zweiten Schenkel 5 zusammenwirkt.

Ein Zurrbügel, der dadurch gekennzeichnet ist, das erste und das zweite Sicherungselement 6, 6' in der Verschlussstellung miteinander verbindbar sind.

Ein Zurrbügel, der dadurch gekennzeichnet ist, dass ein Verschlussteil zur Verbindung der Sicherungselemente 6, 6' als ein mit dem ersten und/oder dem zweiten Sicherungselement 6, 6' verbundenes Schiebeteil 31 ausgebildet ist.

Ein Zurrbügel, der dadurch gekennzeichnet ist, dass das erste und das zweite Sicherungselement 6, 6' freie, in der Verschlussstellung in eine gegenseitige Anlage bringbare Sicherungselement-Enden 29 aufweist.

Ein Zurrbügel, der dadurch gekennzeichnet ist, dass die Sicherungselement-Enden 29 in der Verschlussstellung in einer Ansicht senkrecht zu der Längsachse x in Überdeckung sind.

Ein Zurrbügel, der dadurch gekennzeichnet ist, dass in der Freigabestellung der Sicherungselemente 6, 6' jedem Sicherungselement 6, 6' ein Schiebeteil 31 zugeordnet ist.

Ein Zurrbügel, der dadurch gekennzeichnet ist, dass das eine oder beide Schiebeteile 31 in der Verschlussstellung verrastbar sind.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

**Liste der Bezugszeichen**

| | | | |
|---|---|---|---|
| 1 | Zurrbügel | 26 | Abwinklung |
| 2 | Ladefläche | 27 | Ende |
| 3 | Querholm | 28 | Rastnut |
| 4 | erster Schenkel | 29 | Sicherungselement-Ende |
| 5 | zweiter Schenkel | 30 | Anschlagrand |
| 6 | erstes Sicherungselement | 31 | Schiebeteil |
| 6' | zweites Sicherungselement | 32 | Übergreifabschnitt |
| 7 | Oberfläche | 33 | Untergreifabschnitt |
| 8 | Spanngurt | 34 | Anschlagrippe |
| 9 | Haken | 35 | Rastvertiefung |
| 10 | Ende | 35' | Rastvertiefung |
| 11 | erste Sicherungsausformung | 36 | Anschlagrippe |
| 11' | zweite Sicherungsausformung | 37 | Ausnehmung |
| 12 | Ringnut | 38 | Werkzeug |
| 13 | Zapfen | 39 | Lasche |
| 14 | Sekantenfläche | 40 | Endfläche |
| 15 | Stecköffnung | 41 | Außenfläche |
| 16 | Aufnahmeöffnung | 42 | Anlageabschnitt |
| 17 | Längsrand | 43 | Randkante |
| 17' | Längsrand | 44 | Anlageabschnitt |
| 18 | Ringnut | 45 | Rücksprung |
| 19 | Rastteil | | |
| 20 | Halterungsabschnitt | | |
| 21 | Rastabschnitt | | |
| 22 | Stegabschnitt | | |
| 23 | Öffnung | a | Pfeilrichtung |
| 24 | Untergreifabschnitt | a' | Pfeilrichtung |
| 25 | Halteöffnung | b | Dicke |
| d | Durchmesser | | |
| d' | Durchmesser | | |
| h | Höhe | | |
| x | Längsachse | | |
| L | Längserstreckung | | |
| U | U-förmige Ausgestaltung | | |
| α | Winkel | | |
| β | Winkel | | |

## Patentansprüche

1. Zurrbügel (1) zur Anbringung an einer Ladefläche (2) eines Lastkraftfahrzeugs, wobei der Zurrbügel (1) eine im Wesentlichen U-förmige Ausgestaltung (U) aufweist, mit einem Querholm (3) und zwei von dem Querholm (3) ausgehenden Schenkeln, einem ersten Schenkel (4) und einem zweiten Schenkel (5), wobei die Schenkel (4, 5) an ihren dem Querholm (3) abgewandten Enden (10, 27) zur Sicherung an der Ladefläche (2) mit einem Sicherungselement (6, 6') verbindbar sind und der eine Längsachse (x) aufweisende erste Schenkel (4) an seinem dem Querholm (3) abgewandten Ende (10) eine Sicherungsausformung (11) aufweist, **dadurch gekennzeichnet, dass** das Sicherungselement (6, 6') zwischen einer Montagestellung, in der die Sicherungsausformung (11) durch das Sicherungselement (6, 6') überlaufbar ist, und einer Verschlussstellung, in der die Sicherungsausformung (11) durch das Sicherungselement (6, 6') nicht überlaufbar ist, um die Längsachse (x) verschwenkbar ist.

2. Zurrbügel nach Anspruch 1, **dadurch gekennzeichnet, dass** die Sicherungsausformung (11) starr mit dem Schenkel (4, 5) verbunden ist.

3. Zurrbügel nach Anspruch 2, **dadurch gekennzeichnet, dass** die Sicherungsausformung (11) einteilig an dem Schenkel (4, 5) angeformt ist.

4. Zurrbügel nach einem der vorhergehenden Ansprüche, **dadurch gekennzeichnet, dass** das Sicherungselement (6, 6') zur Verbindung mit beiden Schenkeln (4, 5) ausgebildet ist.

5. Zurrbügel nach einem der vorhergehenden Ansprüche, **dadurch gekennzeichnet, dass** das Sicherungselement (6) an dem ersten Schenkel (4) in der Verschlussstellung durch die Sicherungsausformung (11) gehaltert ist und an dem zweiten Schenkel (5) durch ein an dem Sicherungselement (6) ausgebildetes Rastteil (19) gehaltert ist und/oder zur Halterung an dem zweiten Schenkel (5) eine Aufnahmeöffnung (16) aufweist, in welche das Ende (10) des zweiten Schenkels (5) im Zuge der Verschwenkung des Sicherungselements (6) um das Ende (10) des ersten Schenkels (4) aufnehmbar ist.

6. Zurrbügel nach Anspruch 5, **dadurch gekennzeichnet, dass** das Rastteil (19) durch das Ende (27) des zweiten Schenkels (5) im Zuge einer Aufnahme in der Aufnahmeöffnung (16) aus einer Raststellung in eine Freigabestellung bewegbar ist.

7. Zurrbügel nach Anspruch 6, **dadurch gekennzeichnet, dass** das Rastteil (19) die Raststellung ausgehend von der Freigabestellung selbsttätig einnimmt und/oder zur Zusammenwirkung mit einer an dem zweiten Schenkel (5) ausgebildeten Rastnut (28) geformt ist und/oder eine Halteöffnung (25) aufweist, in welche das Ende (27) des zweiten Schenkels (5) bei der Bewegung des Rastteils (19) aus der Freigabestellung in die Raststellung einfährt und/oder mit dem Sicherungselement (6) verbunden ist.

8. Zurrbügel nach einem der Ansprüche 5 bis 7, **dadurch gekennzeichnet, dass** die Aufnahmeöffnung (16) für das Ende (27) des zweiten Schenkels (5) U-förmig ist.

9. Zurrbügel nach einem der vorhergehenden Ansprüche, **dadurch gekennzeichnet, dass** sowohl der erste als auch der zweite Schenkel (4, 5) eine erste und eine zweite Sicherungsausformung (11, 11') aufweist, die durch Verschwenken des Sicherungselements (6, 6') um die Längsachse (x) überlaufbar sind und/oder dass zwei Sicherungselemente (6, 6') ausgebildet sind, ein erstes und ein zweites Sicherungselement (6, 6'), wobei das erste Sicherungselement (6) mit dem ersten Schenkel (4) zusammenwirkt und das zweite Sicherungselement (6') mit dem zweiten Schenkel (5) zusammenwirkt.

10. Zurrbügel nach Anspruch 9, **dadurch gekennzeichnet, dass** das erste und das zweite Sicherungselement (6, 6') in der Verschlussstellung miteinander verbindbar sind.

11. Zurrbügel nach Anspruch 10, **dadurch gekennzeichnet, dass** zur Verbindung des ersten und des zweiten Sicherungselements (6, 6') in der Verschlussstellung ein Verschlussteil vorgesehen ist, das als ein mit dem ersten und/oder dem zweiten Sicherungselement (6, 6') verbundenes Schiebeteil (31) ausgebildet ist.

12. Zurrbügel nach einem der Ansprüche 9 bis 11, **dadurch gekennzeichnet, dass** das erste und das zweite Sicherungselement (6, 6') freie, in der Verschlussstellung in eine gegenseitige Anlage bringbare Sicherungselement-Enden (29) aufweist.

13. Zurrbügel nach einem der Ansprüche 9 bis 12, **dadurch gekennzeichnet, dass** die Sicherungselement-Enden (29) in der Verschlussstellung in einer Ansicht senkrecht zu der Längsachse (x) in Überdeckung sind.

14. Zurrbügel nach einem der Ansprüche 11 bis 13, **dadurch gekennzeichnet, dass** in der Freigabestellung der Sicherungselemente (6, 6') jedem Sicherungselement (6, 6') ein Schiebeteil (31) zugeordnet ist.

15. Zurrbügel nach einem der Ansprüche 11 bis 14, **dadurch gekennzeichnet, dass** das eine oder beide Schiebeteile (31) in der Verschlussstellung verrastbar sind.

## Claims

1. Lashing bracket (1) for attachment to a loading surface (2) of a lorry, wherein the lashing bracket (1) has a substantially U-shaped configuration (U), with a transverse spar (3) and two legs extending from the transverse spar (3), a first leg (4) and a second leg (5), wherein the legs (4, 5) can be connected at their ends (10, 27) remote from the transverse spar (3) to a securing element (6, 6') for securing to the loading surface (2), and the first leg (4), which has a longitudinal axis (x), has a securing formation (11) at its end (10) remote from the transverse spar (3), **characterized in that** the securing element (6, 6') can be moved between an assembly position in which the securing formation (11) can be overrun by the securing element (6, 6'), and a locking position in which the securing formation (11) cannot be overrun by the securing element (6, 6'), can be pivoted about the longitudinal axis (x).

2. Lashing bracket according to claim 1, **characterized in that** the securing formation (11) is rigidly connected to the leg (4, 5).

3. Lashing bracket according to claim 2, **characterized in that** the securing formation (11) is integrally formed on the leg (4, 5).

4. Lashing bracket according to one of the preceding claims, **characterized in that** the securing element (6, 6') is designed for connection to both legs (4, 5).

5. Lashing bracket according to one of the preceding claims, **characterized in that** the securing element (6) is held on the first leg (4) in the locked position by the securing formation (11) and is held on the second leg (5) by a latching part (19) formed on the securing element (6) and/or has a receiving opening (16) for holding on the second leg (5), into which the end (10) of the second leg (5) can be received in the course of the pivoting of the securing element (6) about the end (10) of the first leg (4), (6) around the end (10) of the first leg (4).

6. Lashing bracket according to claim 5, **characterized in that** the latching part (19) can be moved from a latching position into a release position by the end (27) of the second leg (5) in the course of being received in the receiving opening (16).

7. Lashing bracket according to claim 6, **characterized in that** the latching part (19) assumes the latching position automatically starting from the release position and/or is shaped to interact with a latching groove (28) formed on the second leg (5) and/or has a retaining opening (25) into which the end (27) of the second leg (5) moves when the latching part (19) moves from the release position into the latching position and/or is connected to the securing element (6).

8. Lashing bracket according to one of claims 5 to 7, **characterized in that** the receiving opening (16) for the end (27) of the second leg (5) is U-shaped.

9. Lashing bracket according to one of the preceding claims, **characterized in that** both the first and the second leg (4, 5) have a first and a second securing formation (11, 11'), which can be overrun by pivoting the securing element (6, 6') about the longitudinal axis (x) and/or **in that** two securing elements (6, 6') are formed, a first and a second securing element (6, 6'), the first securing element (6) interacting with the first leg (4) and the second securing element (6') interacting with the second leg (5).

10. Lashing bracket according to claim 9, **characterized in that** the first and second securing elements (6, 6') can be connected to one another in the locked position.

11. Lashing bracket according to claim 10, **characterized in that** a locking part is provided for connecting the first and the second securing element (6, 6') in the locking position, which locking part is designed as a sliding part (31) connected to the first and/or the second securing element (6, 6').

12. Lashing bracket according to one of claims 9 to 11, **characterized in that** the first and second securing elements (6, 6') have free securing element ends (29) which can be brought into mutual contact in the locked position.

13. Lashing bracket according to one of claims 9 to 12, **characterized in that** the securing element ends (29) are in overlap in the locked position in a view perpendicular to the longitudinal axis (x).

14. Lashing bracket according to one of claims 11 to 13, **characterized in that**, in the release position of the securing elements (6, 6'), a sliding part (31) is assigned to each securing element (6, 6').

15. Lashing bracket according to one of claims 11 to 14, **characterized in that** one or both sliding parts (31) can be latched in the locked position.

## Revendications

1. Arceau d'arrimage (1) destiné à être monté sur une surface de chargement (2) d'un véhicule de transport de marchandises, l'arceau d'arrimage (1) présentant une configuration (U) essentiellement en forme de U, avec un longeron transversal (3) et deux branches partant du longeron transversal (3), une première branche (4) et une deuxième branche (5), les branches (4, 5) étant reliées à leurs extrémités (10, 27) opposées au longeron transversal (3) à un élément de sécurité (6, 6') et la première branche (4) présentant un axe longitudinal (x) présente à son extrémité (10) opposée au longeron transversal (3) une formation de sécurité (11), **caractérisé en ce que** l'élément de sécurité (6, 6') peut être déplacé entre une position de montage, dans laquelle la conformation de sécurité (11) peut être débordée par l'élément de sécurité (6, 6'), et une position de fermeture dans laquelle la formation de sécurité (11) ne peut pas être débordée par l'élément de sécurité (6, 6'), peut pivoter autour de l'axe longitudinal (x).

2. Arceau d'arrimage selon la revendication 1, **caractérisé en ce que** la formation de sécurité (11) est reliée de manière rigide à la branche (4, 5).

3. Arceau d'arrimage selon la revendication 2, **caractérisé en ce que** la formation de sécurité (11) est formée d'une seule pièce sur la branche (4, 5).

4. Arceau d'arrimage selon l'une des revendications précédentes, **caractérisé en ce que** l'élément de sécurité (6, 6') est conçu pour être relié aux deux branches (4, 5).

5. Arceau d'arrimage selon l'une des revendications précédentes, **caractérisé en ce que** l'élément de sécurité (6) est maintenu sur la première branche (4) dans la position de fermeture par la formation de sécurité (11) et est maintenu sur la deuxième branche (5) par une pièce d'encliquetage (19) formée sur l'élément de sécurité (6) et/ou présente pour le maintien sur la deuxième branche (5) une ouverture de réception (16) dans laquelle l'extrémité (10) de la deuxième branche (5) est logée au cours du pivotement de l'élément de sécurité (6) branche (4).

6. Arceau d'arrimage selon la revendication 5, **caractérisé en ce que** la pièce d'encliquetage (19) peut être déplacée d'une position d'arrêt à une position de libération par l'extrémité (27) de la deuxième branche (5) au cours d'un logement dans l'ouverture de réception (16).

7. Arceau d'arrimage selon la revendication 6, **caractérisé en ce que** la pièce d'encliquetage (19) prend automatiquement la position d'encliquetage à partir de la position de libération et/ou est formée pour coopérer avec une rainure d'encliquetage (28) formée sur la deuxième branche (5) et/ou présente une ouverture de retenue (25) dans laquelle l'extrémité (27) de la deuxième branche (5) pénètre lors du mouvement de la pièce d'encliquetage (19) de la position de libération à la position d'encliquetage et/ou est reliée à l'élément de sécurité (6).

8. Arceau d'arrimage selon l'une des revendications 5 à 7, **caractérisé en ce que** l'ouverture de réception (16) pour l'extrémité (27) de la deuxième branche (5) est en forme de U.

9. Arceau d'arrimage selon l'une des revendications précédentes, **caractérisé en ce qu'**aussi bien la première que la deuxième branche (4, 5) comportent un premier et un deuxième élément de fixation (4, 5).
Présente une première et une deuxième formation de sécurité (11, 11') qui peuvent être dépassées par pivotement de l'élément de sécurité (6, 6') autour de l'axe longitudinal (x) et/ou que deux éléments de sécurité (6, 6') sont réalisés, un premier et un deuxième élément de sécurité (6, 6'), le premier élément de sécurité (6) coopérant avec la première branche (4) et le deuxième élément de sécurité (6') coopérant avec la deuxième branche (5).

10. Arceau d'arrimage selon la revendication 9, **caractérisé en ce que** le premier et le deuxième élément de sécurité (6, 6') peuvent être reliés entre eux dans la position de fermeture.

11. Arceau d'arrimage selon la revendication 10, **caractérisé en ce que**, pour relier le premier et le deuxième élément de sécurité (6, 6') dans la position de fermeture, il est prévu une pièce de fermeture qui se présente sous la forme d'un élément crulissante relié au premier et/ou le deuxième élément de sécurité (6, 6').

12. Arceau d'arrimage selon l'une des revendications 9 à 11, **caractérisé en ce que** le premier et le deuxième élément de sécurité (6, 6') présentent des extrémités d'élément de sécurité (29) libres, pouvant être amenées en appui mutuel dans la position de fermeture.

13. Arceau d'arrimage selon l'une des revendications 9 à 12, **caractérisé en ce que** les extrémités de l'élément de sécurité (29) sont en recouvrement dans une vue perpendiculaire à l'axe longitudinal (x).

14. Arceau d'arrimage selon l'une des revendications 11 à 13, **caractérisé en ce que**, dans la position de libération des éléments de sécurité (6, 6'), une partie coulissante (31) est associée à chaque élément de sécurité (6, 6').

15. Arceau d'arrimage selon l'une des revendications 11 à 14, **caractérisé en ce que** l'une ou les deux parties coulissantes (31) peuvent être encliquetées dans la position de fermeture.
